# EUROPEAN PATENT APPLICATION

(11) **EP 3 498 669 A1**
(43) Date of publication of application: **19.06.2019**
(21) Application number: 17839255.1
(22) Date of filing: 28.07.2017
(51) Int. Cl.: C01B 32/158

(54) **CARBON NANOTUBE AGGREGATE**

(30) Priority: 12.08.2016 JP 2016158634; 31.03.2017 JP 2017069814
(71) Applicant: Nitto Denko Corporation, Ibaraki-shi, Osaka 567-8680 (JP)
(72) Inventor: HATAKEYAMA, Yoshiharu, Ibaraki-shi Osaka 567-8680 (JP); ICHIKAWA, Tomoaki, Ibaraki-shi Osaka 567-8680 (JP); MASUDA, Shotaro, Ibaraki-shi Osaka 567-8680 (JP); MAENO, Yohei, Ibaraki-shi Osaka 567-8680 (JP)
(74) Representative: Müller-Boré & Partner Patentanwälte PartG mbB
(86) International application number: PCT/JP2017/027492
(87) International publication number: WO 2018/030182

(57) **Abstract**

Provided is a carbon nanotube aggregate that can maintain a sheet shape. The carbon nanotube aggregate of the present invention includes a plurality of carbon nanotubes, the carbon nanotube aggregate being formed into a sheet shape, wherein the carbon nanotube aggregate includes a non-aligned portion of the carbon nanotubes. In one embodiment, the carbon nanotube aggregate further includes an aligned portion of the carbon nanotubes. In one embodiment, the non-aligned portion is present at an end portion in a lengthwise direction of the carbon nanotube aggregate.

## Description

### Technical Field

The present invention relates to a carbon nanotube aggregate.

### Background Art

In transporting an object to be processed, such as a material, a production intermediate, or a product, in a manufacturing process for a semiconductor device or the like, the object to be processed is transported through use of a carrying member, such as a movable arm or a movable table (see, for example, Patent Literatures 1 and 2). In such transport, there is a demand for a member on which the object to be processed is to be mounted (fixing jig for transportation) to have such a strong gripping force as to prevent the object to be processed from shifting in position while being transported. In addition, such demand has increased year by year along with a demand for a faster manufacturing process.

However, in a related-art fixing jig for transportation, there is a problem in that the object to be processed is held by an elastic material, such as a resin, and hence the elastic material is liable to adhere to and remain on the object to be processed. In addition, there is a problem in that the elastic material, such as a resin, has low heat resistance, and hence the gripping force of the jig is reduced under a high-temperature environment.

When a material such as ceramics is used for the fixing jig for transportation, contamination of the object to be processed is prevented, and temperature dependence of a gripping force is reduced. However, a fixing jig for transportation formed of such material involves a problem of inherently having a weak gripping force, and thus being unable to sufficiently hold the object to be processed even at normal temperature.

In addition, a method of holding the object to be processed under a high-temperature environment is, for example, a method involving adsorbing the obj ect to be processed under reduced pressure, or a method involving fixing the object to be processed by the shape of a fixing jig for transportation (e.g., chucking or counterbore fixing). However, the method involving adsorbing the object to be processed under reduced pressure is effective only under an air atmosphere, and cannot be adopted under a vacuum in, for example, a CVD step. In addition, the method involving fixing the object to be processed by the shape of the fixing jig for transportation involves, for example, the following problems. The object to be processed is damaged, or a particle is produced, by contact between the object to be processed and the fixing jig for transportation.

A possible method of solving such problems as described above is the use of a pressure-sensitive adhesive structure including a carbon nanotube aggregate as a fixing jig for transportation. The carbon nanotube aggregate may be typically obtained by a method (chemical vapor deposition method) involving: forming a catalyst layer on a predetermined base material; and filling a carbon source under a state in which a catalyst is activated with heat, plasma, or the like, followed by the growth of carbon nanotubes. Such production method provides a carbon nanotube aggregate including the carbon nanotubes aligned substantially vertically from the base material.

When the carbon nanotube aggregate is applied to a fixing jig for transportation, the carbon nanotube aggregate obtained as described above is removed from the base material and fixed onto the fixing jig for transportation. However, the carbon nanotubes are bundled by the action of a van der Waals force, and connection in their surface directions is so weak that the carbon nanotubes are easily separated. Accordingly, it is difficult to remove the carbon nanotube aggregate in a sheet shape from the base material.

### Citation List

### Patent Literature

[PTL 1] JP 2001-351961 A
[PTL 2] JP 2013-138152 A

### Summary of Invention

### Technical Problem

An object of the present invention is to provide a carbon nanotube aggregate that is excellent in gripping force and can maintain a sheet shape.

### Solution to Problem

According to one embodiment of the present invention, there is provided a carbon nanotube aggregate, including a plurality of carbon nanotubes, the carbon nanotube aggregate being formed into a sheet shape, wherein the carbon nanotube aggregate includes a non-aligned portion of the carbon nanotubes.

In one embodiment, the carbon nanotube aggregate further includes an aligned portion of the carbon nanotubes.

In one embodiment, the non-aligned portion is present near an end portion in a lengthwise direction of the carbon nanotube aggregate.

In one embodiment, the non-aligned portion positioned near the end portion in the lengthwise direction has a length of 0.5 µm or more.

In one embodiment, a surface of the carbon nanotube aggregate having formed thereon the non-aligned portion has a maximum coefficient of static friction at 23°C of 1.0 or more.

In one embodiment, the carbon nanotube aggregate is free of an aligned portion of the carbon nanotubes.

In one embodiment, the carbon nanotube aggregate has a thickness of from 10 µm to 5,000 µm.

According to another embodiment of the present invention, there is provided a sheet. The sheet includes the carbon nanotube aggregate.

### Advantageous Effects of Invention

According to the present invention, the carbon nanotube aggregate that is excellent in gripping force and can maintain a sheet shape can be provided.

### Brief Description of Drawings

FIG. **1** is a schematic sectional view of a carbon nanotube aggregate according to one embodiment of the present invention.
FIG. **2** is a SEM image of the carbon nanotube aggregate according to one embodiment of the present invention.
FIG. **3** is a schematic sectional view of a carbon nanotube aggregate according to another embodiment of the present invention.
FIG. **4** is a schematic sectional view of a production apparatus for a carbon nanotube aggregate in one embodiment of the present invention.

### Description of Embodiments

### A. Carbon Nanotube Aggregate

### A-1. Overall Configuration of Carbon Nanotube Aggregate

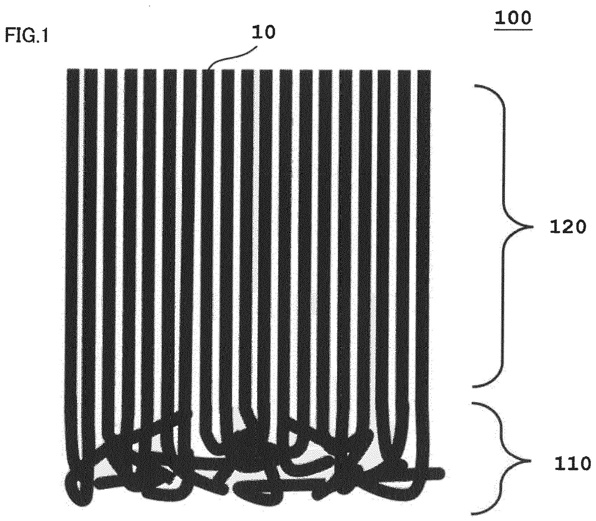

FIG. **1** is a schematic sectional view for schematically illustrating part of a carbon nanotube aggregate according to one embodiment of the present invention. A carbon nanotube aggregate **100** includes a plurality of carbon nanotubes **10**, and is formed into a sheet shape. The carbon nanotube aggregate **100** includes a non-aligned portion **110** of the carbon nanotubes **10**. In one embodiment, as illustrated in FIG. **1**, the carbon nanotube aggregate **100** further includes an aligned portion **120** of the carbon nanotubes **10**. The aligned portion **120** of the carbon nanotubes **10** is aligned in a substantially vertical direction relative to a predetermined plane (e.g., one surface of the carbon nanotube aggregate defined in the end portions of the plurality of carbon nanotubes). The term "substantially vertical direction" as used herein means that an angle relative to the predetermined plane is preferably 90° ± 20°, more preferably 90°± 15°, still more preferably 90°±10°, particularly preferably 90° ± 5°.

In one embodiment, the non-aligned portion **110** of the carbon nanotubes **10** is present near an end portion in the lengthwise direction of the carbon nanotube aggregate **100**. In FIG. **1**, the non-aligned portion **110** is formed at one end of the carbon nanotube aggregate **100**. Thepositionof the non-alignedportion is not limited to the example illustrated in FIG. **1**, and the non-aligned portions of the carbon nanotubes may be present near both end portions in the lengthwise direction of the carbon nanotube aggregate. In addition, the non-aligned portion of the carbon nanotubes may be present near the intermediate portion of the carbon nanotube aggregate. Further, the carbon nanotube aggregate may include a plurality of non-aligned portions or aligned portions of the carbon nanotubes.

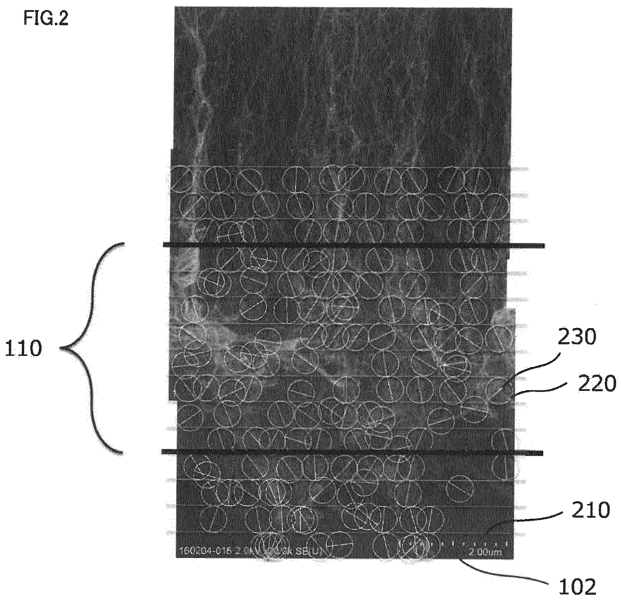

Herein, the non-aligned portion of the carbon nanotubes means an aggregate portion including such carbon nanotubes that the deviation value of their alignment angles is 40° or more. The deviation value of the alignment angles of the carbon nanotubes is determined as described below.
(1) A SEM image (magnification: 20, 000, image range: the thickness of the carbon nanotube aggregatexa width of about 6 µm) of a section of the carbon nanotube aggregate is acquired. FIG. **2** is the SEM image, and a side closer to a lower surface **102** of the carbon nanotube aggregate is shown.
(2) Surfaces which are defined in the end portions of a plurality of carbon nanotubes near both end portions in the thickness direction of the carbon nanotube aggregate and in each of which 10 or more carbon nanotubes are present in the widthwise direction of the aggregate are defined as an upper surface and the lower surface **102.** In one embodiment, the deviation value of the alignment angles of the carbon nanotubes may be measured after the formation of the carbon nanotube aggregate on a base material and before the collection of the carbon nanotube aggregate from the base material. At this time, the lower surface of the carbon nanotube aggregate is a surface substantially parallel to the base material.
(3) Lines **210** parallel to the lower surface **102** are drawn from the lower surface **102** every 500 nm to set divisions at intervals of 500 nm. In FIG. **2**, a state in which up to 15 lines are drawn (state in which 15 divisions are set) is shown.
(4) In one division, 10 carbon nanotubes are selected at random.
(5) For each selected carbon nanotube, a circle **220** including the carbon nanotube is set. At this time, the circle **220** is set so that a straight line **230** connecting the two end portions of the carbon nanotube in contact with the circle may have a length of 500 nm ± 50 nm in the division.
(6) The alignment angle of the straight line **230** relative to the lower surface **102** is measured, and the standard deviation of the alignment angles is determined from the angles of the 10 carbon nanotubes in the division.
(7) When the standard deviation of the alignment angles is 40° or more, it is judged that the carbon nanotubes in the division are not aligned, and hence the division is the non-aligned portion **110** of the carbon nanotubes. In FIG. **2**, the thickness of the non-aligned portion **110** is 4 µm. The non-aligned portion of the carbon nanotubes is hereinafter sometimes simply referred to as "non-aligned portion".

Herein, the aligned portion of the carbon nanotubes means an aggregate portion including such carbon nanotubes that the deviation value of their alignment angles is less than 40°. That is, the standard deviation of the alignment angles of the carbon nanotubes is determined for each predetermined division as described above, and when the standard deviation is less than 40°, it is judged that the carbon nanotubes in the division are aligned, and hence the division is the aligned portion of the carbon nanotubes. The aligned portion of the carbon nanotubes is hereinafter sometimes simply referred to as "aligned portion".

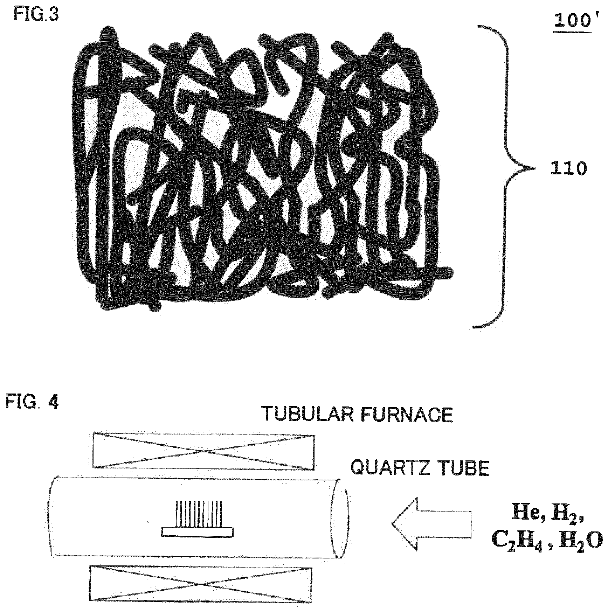

FIG. **3** is a schematic sectional view for schematically illustrating a carbon nanotube aggregate according to another embodiment of the present invention. In the embodiment illustrated in FIG. **3**, a carbon nanotube aggregate **100**' is free of the aligned portion **120** of the carbon nanotube aggregate **100**, and includes the non-aligned portion **110** of the carbon nanotubes in its entirety.

In the present invention, when the carbon nanotube aggregate includes the non-aligned portion of the carbon nanotubes as described above, connection in the surface directions of the carbon nanotubes is strengthened. As a result, the carbon nanotube aggregate can be formed into a sheet shape.

In one embodiment, the carbon nanotube aggregate including the aligned portion and non-aligned portion of the carbon nanotubes as illustrated in FIG. **1** is sometimes superior in pressure-sensitive adhesive property to the carbon nanotube aggregate formed only of the non-aligned portion of the carbon nanotubes (FIG. **3**). This is probably because of a difference between production methods for the carbon nanotube aggregates, specifically, the presence or absence of compression at the time of their production (details are described later).

In the carbon nanotube aggregate including the aligned portion and the non-aligned portion, the thickness of the non-aligned portion is preferably from 0.5 µm to 50 µm, more preferably from 1 µm to 20 µm, still more preferably from 2 µm to 10 µm, particularly preferably from 2 µm to 7 µm. When the thickness falls within such range, a carbon nanotube aggregate that is excellent in pressure-sensitive adhesive property and can maintain a sheet shape can be obtained.

In the carbon nanotube aggregate including the aligned portion and the non-aligned portion, the ratio of the thickness of the non-aligned portion is preferably from 0.001% to 50%, more preferably from 0.01% to 40%, still more preferably from 0.05% to 30%, particularly preferably from 0.1% to 20% with respect to the thickness of the carbon nanotube aggregate (the sum of the thickness of the aligned portion and the thickness of the non-aligned portion) . When the ratio falls within such range, a carbon nanotube aggregate that is excellent in pressure-sensitive adhesive property and can maintain a sheet shape can be obtained.

The thickness of the carbon nanotube aggregate is, for example, from 10 µm to 5,000 µm, preferably from 50 µm to 4,000 µm, more preferably from 100 µm to 3, 000 µm, still more preferably from 300 µm to 2,000 µm. The thickness of the carbon nanotube aggregate is, for example, the average of thicknesses measured at 3 points sampled at random in a portion inward from an end portion in the surface direction of the carbon nanotube aggregate by 0.2 mm or more.

The maximum coefficient of static frictionof the surface of the carbon nanotube aggregate (surface defined in the end portions of the plurality of carbon nanotubes) against a glass surface at 23°C is preferably 1. 0 or more. The upper limit value of the maximum coefficient of static friction is preferably 50. When the maximum coefficient of static friction falls within such range, a carbon nanotube aggregate excellent in gripping property can be obtained. Needless to say, the the carbon nanotube aggregate having a large coefficient of friction against the glass surface can express a strong gripping property also against an object to be mounted (e.g. , a semiconductor wafer) including a material except glass. A method of measuring the maximum coefficient of static friction is described later.

In one embodiment, the carbon nanotube aggregate of the present invention may be applied to a fixing jig for transportation. The fixing jig for transportation maybe suitably used in, for example, a manufacturing process for a semiconductor device or a manufacturing process for an optical member. In more detail, in the manufacturing process for a semiconductor device, the fixing jig for transportation may be used for transporting a material, a production intermediate, a product, or the like (specifically, a semiconductor material, a wafer, a chip, a substrate, a ceramic plate, a film, or the like) from one step to another or in a predetermined step. Alternatively, in the manufacturing process for an optical member, the fixing jig for transportation may be used for transporting a glass base material or the like from one step to another or in a predetermined step.

### A-1-1. Carbon Nanotube Aggregate including Non-aligned Portion near End Portion in its Lengthwise Direction

In one embodiment, as described above, the carbon nanotube aggregate of the present invention includes the non-aligned portion near the end portion in its lengthwise direction. It is preferred that the carbon nanotube aggregate including the non-aligned portion near the end portion in the lengthwise direction further include the aligned portion, that is, the aggregate be of a configuration in which the non-aligned portion is present in an end portion of the aligned portion. The carbon nanotube aggregate including the non-aligned portion near the end portion in the lengthwise direction may include the non-aligned portion only on one of its surfaces, or may include non-aligned portions on both of its surfaces. In addition, the carbon nanotube aggregate including the non-aligned portion near the end portion in the lengthwise direction may include a non-aligned portion positioned in a place except the vicinity of the end portion in addition to the non-aligned portion positioned near the end portion.

The carbon nanotube aggregate including the non-aligned portion near the end portion in the lengthwise direction can use its surface having the non-aligned portion as a pressure-sensitive adhesive surface to strongly hold a mounted object (e.g., a semiconductor material) mounted on the pressure-sensitive adhesive surface. Such effect may be obtained because of, for example, the following factors: the network structure of the non-aligned portion has dissipation energy; and the actual area of contact between the mounted object and the carbon nanotubes is increased by the network structure.

In the carbon nanotube aggregate including the non-aligned portion near the end portion in the lengthwise direction, the thickness of the non-aligned portion positioned near the end portion is preferably 0.5 µm or more, more preferably from 0.5 µm to 50 µm, still more preferably from 0.5 µm to 20 µm, still further more preferably from 0.5 µm to 15 µm, particularly preferably from 2 µm to 12 µm. When the thickness falls within such range, a carbon nanotube aggregate that can express an excellent gripping force can be obtained. In addition, as the thickness of the non-aligned portion positioned near the end portion becomes larger in the range (i.e., in the case where the thickness is 50 µm or less), a higher gripping force can be obtained.

In the carbon nanotube aggregate including the non-aligned portion near the end portion in the lengthwise direction, the ratio of the thickness of the non-aligned portion positioned near the end portion is preferably from 0. 001% to 50%, more preferably from 0.01% to 40%, still more preferably from 0.05% to 30%, particularly preferably from 0.1% to 20% with respect to the thickness of the carbon nanotube aggregate (the sum of the thickness of the aligned portion and the thickness of the non-aligned portion) . When the ratio falls within such range, a carbon nanotube aggregate that can express an excellent gripping force can be obtained.

In the carbon nanotube aggregate including the non-aligned portion near the end portion in the lengthwise direction, the maximum coefficient of static friction of the surface of the carbon nanotube aggregate having formed thereon the non-aligned portion against a glass surface at 23°C is preferably 1.0 or more, more preferably 1.5 or more, still more preferably 3.0 or more, particularly preferably 5.0 or more. In addition, the maximum coefficient of static friction is preferably 100 or less, more preferably 50 or less, still more preferably 30 or less, particularly preferably 20 or less.

In the carbon nanotube aggregate including the non-aligned portion near the end portion in the lengthwise direction, the frictional force of the surface of the carbon nanotube aggregate having formed thereon the non-aligned portion against a glass surface at 23°C is preferably 0.5 N or more, more preferably from 0.7 N to 50 N, still more preferably from 1.5 N to 30 N, particularly preferably from 3 N to 20 N. The measurement of the frictional force may be performed by the following procedure.

### <Method of measuring Frictional Force>

An evaluation sample is produced by fixing a surface opposite to the frictional force measurement surface of a carbon nanotube aggregate (size: 9mm×9mm) onto a slide glass via a pressure-sensitive adhesive tape (polyimide pressure-sensitive adhesive tape).

Next, the evaluation sample is arranged on another slide glass while the frictional force measurement surface in the evaluation sample is directed downward. A weight is mounted on the evaluation sample, and its mass is set so that a load of 55 g may be applied to the carbon nanotube aggregate.

Next, the evaluation sample is pulled in a horizontal direction while the weight is mounted thereon, followed by the measurement of its frictional force with a suspension weigher (manufactured by CUSTOM Corporation, product name: "393-25"). When the suspension weigher indicates a value of 0.05 kg or more, the numerical value is adopted as the frictional force. When the value indicated by the suspension weigher is less than 0.05 kg, the frictional force is evaluated to be 0 kg.

The features of the carbon nanotube aggregate except the matter described in the section A-1-1 are as described in the section A-1.

### A-2. Carbon Nanotubes

For the carbon nanotubes forming the carbon nanotube aggregate, for example, the following embodiments (a first embodiment and a second embodiment) may be adopted.

In a first embodiment, the carbon nanotube aggregate includes a plurality of carbon nanotubes, in which the carbon nanotubes each have a plurality of walls, the distribution width of the wall number distribution of the carbon nanotubes is 10 walls or more, and the relative frequency of the mode of the wall number distribution is 25% or less. A carbon nanotube aggregate having such configuration is excellent in pressure-sensitive adhesive strength.

In the first embodiment, the distribution width of the wall number distribution of the carbon nanotubes is preferably 10 walls or more, more preferably from 10 walls to 30 walls, still more preferably from 10 walls to 25 walls, particularly preferably from 10 walls to 20 walls. When the distribution width of the wall number distribution of the carbon nanotubes is adjusted to fall within such range, a carbon nanotube aggregate excellent in pressure-sensitive adhesive strength can be obtained. The "distribution width" of the wall number distribution of the carbon nanotubes refers to a difference between the maximum wall number and minimum wall number of the wall numbers of the carbon nanotubes.

The wall number and wall number distribution of the carbon nanotubes may each be measured with any appropriate device. The wall number and wall number distribution of the carbon nanotubes are each preferably measured with a scanning electron microscope (SEM) or a transmission electron microscope (TEM). For example, at least 10, preferably 20 or more carbon nanotubes may be taken out from the carbon nanotube aggregate to evaluate the wall number and the wall number distribution by the measurement with the SEM or the TEM.

In the first embodiment, the maximum wall number of the wall numbers of the carbon nanotubes is preferably from 5 to 30, more preferably from 10 to 30, still more preferably from 15 to 30, particularly preferably from 15 to 25.

In the first embodiment, the minimum wall number of the wall numbers of the carbon nanotubes is preferably from 1 to 10, more preferably from 1 to 5.

In the first embodiment, the relative frequency of the mode of the wall number distribution of the carbon nanotubes is preferably 25% or less, more preferably from 1% to 25%, still more preferably from 5% to 25%, particularly preferably from 10% to 25%, most preferably from 15% to 25%. When the relative frequency of the mode of the wall number distribution of the carbon nanotubes is adjusted to fall within the range, a carbon nanotube aggregate excellent in pressure-sensitive adhesive strength can be obtained.

In the first embodiment, the mode of the wall number distribution of the carbon nanotubes is present at preferably from 2 walls to 10 walls in number, more preferably from 3 walls to 10 walls in number. When the mode of the wall number distribution of the carbon nanotubes is adjusted to fall within the range, a carbon nanotube aggregate excellent in pressure-sensitive adhesive strength can be obtained.

In the first embodiment, regarding the shape of each of the carbon nanotubes, the lateral section of the carbon nanotube only needs to have any appropriate shape. The lateral section is of, for example, a substantially circular shape, an oval shape, or an n-gonal shape (n represents an integer of 3 or more).

In the first embodiment, the diameter of each of the carbon nanotubes is preferably from 0.3 nm to 2,000 nm, more preferably from 1 nm to 1,000 nm, still more preferably from 2 nm to 500 nm. When the diameter of each of the carbon nanotubes is adjusted to fall within the range, a carbon nanotube aggregate excellent in pressure-sensitive adhesive strength can be obtained.

In the first embodiment, the specific surface area and density of each of the carbon nanotubes may be set to any appropriate values.

In a second embodiment, the carbon nanotube aggregate includes a plurality of carbon nanotubes, in which the carbon nanotubes each have a plurality of walls, the mode of the wall number distribution of the carbon nanotubes is present at 10 walls or less in number, and the relative frequency of the mode is 30% or more. A carbon nanotube aggregate having such configuration is excellent in pressure-sensitive adhesive strength.

In the second embodiment, the distribution width of the wall number distribution of the carbon nanotubes is preferably 9 walls or less, more preferably from 1 wall to 9 walls, still more preferably from 2 walls to 8 walls, particularly preferably from 3 walls to 8 walls. When the distribution width of the wall number distribution of the carbon nanotubes is adjusted to fall within such range, a carbon nanotube aggregate excellent in pressure-sensitive adhesive strength can be obtained.

In the second embodiment, the maximum wall number of the wall numbers of the carbon nanotubes is preferably from 1 to 20, more preferably from 2 to 15, still more preferably from 3 to 10.

In the second embodiment, the minimum wall number of the wall numbers of the carbon nanotubes is preferably from 1 to 10, more preferably from 1 to 5.

In the second embodiment, the relative frequency of the mode of the wall number distribution of the carbon nanotubes is preferably 30% or more, more preferably from 30% to 100%, still more preferably from 30% to 90%, particularly preferably from 30% to 80%, most preferably from 30% to 70%.

In the second embodiment, the mode of the wall number distribution of the carbon nanotubes is present at preferably 10 walls or less in number, more preferably from 1 wall to 10 walls in number, still more preferably from 2 walls to 8 walls in number, particularly preferably from 2 walls to 6 walls in number.

In the second embodiment, regarding the shape of each of the carbon nanotubes, the lateral section of the carbon nanotube only needs to have any appropriate shape. The lateral section is of, for example, a substantially circular shape, an oval shape, or an n-gonal shape (n represents an integer of 3 or more).

In the second embodiment, the diameter of each of the carbon nanotubes is preferably from 0.3 nm to 2, 000nm, more preferably from 1 nm to 1,000 nm, still more preferably from 2 nm to 500 nm. When the diameter of each of the carbon nanotubes is adjusted to fall within the range, a carbon nanotube aggregate excellent in pressure-sensitive adhesive strength can be obtained.

In the second embodiment, the specific surface area and density of the carbon nanotubes may be set to any appropriate values .

### B. Method of producing Carbon Nanotube Aggregate

Any appropriate method may be adopted as a method of producing the carbon nanotube aggregate.

The method of producing the carbon nanotube aggregate is, for example, a method of producing a carbon nanotube aggregate aligned substantially perpendicularly from a base material by chemical vapor deposition (CVD) involving forming a catalyst layer on the base material and supplying a carbon source under a state in which a catalyst is activated with heat, plasma, or the like to grow the carbon nanotubes.

Any appropriate base material may be adopted as the base material that may be used in the method of producing the carbon nanotube aggregate. The base material is, for example, a material having smoothness and high-temperature heat resistance enough to resist the production of the carbon nanotubes. Examples of such material include: metal oxides, such as quartz glass, zirconia, and alumina; metals, such as silicon (e.g. , a silicon wafer), aluminum, and copper; carbides, such as silicon carbide; and nitrides, such as silicon nitride, aluminum nitride, and gallium nitride.

Any appropriate apparatus maybe adopted as an apparatus for producing the carbon nanotube aggregate. The apparatus is, for example, a thermal CVD apparatus of a hot wall type formed by surrounding a cylindrical reaction vessel with a resistance heating electric tubular furnace as illustrated in FIG. **4**. In this case, for example, a heat-resistant quartz tube is preferably used as the reaction vessel.

Any appropriate catalyst may be used as the catalyst (material for the catalyst layer) that may be used in the production of the carbon nanotube aggregate. Examples of the catalyst include metal catalysts, such as iron, cobalt, nickel, gold, platinum, silver, and copper.

When the carbon nanotube aggregate is produced, an intermediate layer may be arranged between the base material and the catalyst layer as required. A material forming the intermediate layer is, for example, a metal or a metal oxide. In one embodiment, the intermediate layer includes an alumina/hydrophilic film.

Any appropriate method may be adopted as a method of producing the alumina/hydrophilic film. For example, the film is obtained by producing a SiO₂ film on the base material, depositing Al from the vapor, and then increasing the temperature of Al to 450°C to oxidize Al. According to such production method, Al₂O₃ interacts with the hydrophilic SiO₂ film, and hence an Al₂O₃ surface different from that obtained by directly depositing Al₂O₃ from the vapor in particle diameter is formed. When Al is deposited from the vapor, and then its temperature is increased to 450°C so that Al may be oxidized without the production of any hydrophilic film on the base material, it may be difficult to form the Al₂O₃ surface having a different particle diameter. In addition, when the hydrophilic film is produced on the base material and Al₂O₃ is directly deposited from the vapor, it may also be difficult to form the Al₂O₃ surface having a different particle diameter.

The thickness of the catalyst layer that may be used in the production of the carbon nanotube aggregate is preferably from 0.01 nm to 20 nm, more preferably from 0.1 nm to 10 nm in order to form fine particles. When the thickness of the catalyst layer that may be used in the production of the carbon nanotube aggregate is adjusted to fall within the range, a carbon nanotube aggregate including a non-aligned portion can be formed.

The amount of the catalyst layer that may be used in the production of the carbon nanotube aggregate is preferably from 50 ng/cm² to 3,000 ng/cm², more preferably from 100 ng/cm² to 1,500 ng/cm², particularly preferably from 300 ng/cm² to 1,000 ng/cm². When the amount of the catalyst layer that maybe used in the production of the carbon nanotube aggregate is adjusted to fall within the range, a carbon nanotube aggregate including a non-aligned portion can be formed.

Any appropriate method may be adopted as a method of forming the catalyst layer. Examples of the method include a method involving depositing a metal catalyst from the vapor, for example, with an electron beam (EB) or by sputtering and a method involving applying a suspension of metal catalyst fine particles onto the base material.

The catalyst layer formed by the above-mentioned method may be used in the production of the carbon nanotube aggregate by being turned into fine particles by treatment such as heating treatment. For example, the temperature of the heating treatment is preferably from 400°C to 1,200°C, more preferably from 500°C to 1, 100°C, still more preferably from 600°C to 1, 000°C, particularly preferably from 700°C to 900°C. For example, the holding time of the heating treatment is preferably from 0 minutes to 180 minutes, more preferably from 5 minutes to 150 minutes, still more preferably from 10 minutes to 120 minutes, particularly preferably from 15 minutes to 90 minutes . In one embodiment, when the heating treatment is performed, a carbon nanotube aggregate in which a non-aligned portion is appropriately formed can be obtained. For example, with regard to the sizes of catalyst fine particles formed by a method such as the heating treatment as described above, the average particle diameter of their circle-equivalent diameters is preferably from 1 nm to 300 nm, more preferably from 3 nm to 100 nm, still more preferably from 5 nm to 50 nm, particularly preferably from 10 nm to 30 nm. In one embodiment, when the sizes of the catalyst fine particles satisfy the condition, a carbon nanotube aggregate in which a non-aligned portion is appropriately formed can be obtained.

Any appropriate carbon source may be used as the carbon source that may be used in the production of the carbon nanotube aggregate. Examples thereof include: hydrocarbons, such as methane, ethylene, acetylene, and benzene; and alcohols, such as methanol and ethanol.

In one embodiment, the formation of the non-aligned portion may be controlled by the kind of the carbon source to be used. In one embodiment, when ethylene is used as the carbon source, the non-aligned portion is formed.

In one embodiment, the carbon source is supplied as a mixed gas together with helium, hydrogen, and/or water vapor. In one embodiment, the formation of the non-aligned portion may be controlled by the composition of the mixed gas. The non-aligned portion may be formed by, for example, increasing the amount of hydrogen in the mixed gas.

The concentration of the carbon source (preferably ethylene) in the mixed gas at 23°C is preferably from 2 vol% to 30 vol%, more preferably from 2 vol% to 20 vol%. The concentration of helium in the mixed gas at 23°C is preferably from 15 vol% to 92 vol%, more preferably from 30 vol% to 80 vol%. The concentration of hydrogen in the mixed gas at 23°C is preferably from 5 vol% to 90 vol%, more preferably from 20 vol% to 90 vol%. The concentration of water vapor in the mixed gas at 23°C is preferably from 0.02 vol% to 0.3 vol%, more preferably from 0.02 vol% to 0.15 vol%. In one embodiment, when the mixed gas having the foregoing composition is used, a carbon nanotube aggregate in which a non-aligned portion is appropriately formed can be obtained.

A volume ratio (hydrogen/carbon source) between the carbon source (preferably ethylene) and hydrogen in the mixed gas at 23°C is preferably from 2 to 20, more preferably from 4 to 10. When the ratio falls within such range, a carbon nanotube aggregate in which a non-aligned portion is appropriately formed can be obtained.

A volume ratio (hydrogen/water vapor) between the water vapor and hydrogen in the mixed gas at 23°C is preferably from 100 to 2,000, more preferably from 200 to 1,500. When the ratio falls within such range, a carbon nanotube aggregate in which a non-aligned portion is appropriately formed can be obtained.

Any appropriate temperature may be adopted as a production temperature in the production of the carbon nanotube aggregate. For example, the temperature is preferably from 400°C to 1,000°C, morepreferably from 500°C to 900°C, still more preferably from 600°C to 800°C, still further more preferably from 700°C to 800°C, particularly preferably from 730°C to 780°C in order that catalyst particles allowing sufficient expression of the effects of the present invention may be formed. The formation of the non-aligned portion may be controlled by the production temperature.

In one embodiment, the following procedure is followed: as described above, the catalyst layer is formed on the base material, and under a state in which the catalyst is activated, the carbon source is supplied to grow the carbon nanotubes; and then, the supply of the carbon source is stopped, and the carbon nanotubes are maintained at a reaction temperature under a state in which the carbon source is present. In one embodiment, the formation of the non-aligned portion may be controlled by conditions for the reaction temperature-maintaining step.

In one embodiment, the following procedure may be followed: as described above, the catalyst layer is formed on the base material, and under a state in which the catalyst is activated, the carbon source is supplied to grow the carbon nanotubes; and then, a predetermined load is applied in the thickness direction of each of the carbon nanotubes on the base material to compress the carbon nanotubes. According to such procedure, a carbon nanotube aggregate (FIG. 3) formed only of the non-aligned portion of the carbon nanotubes can be obtained. The load is, for example, from 1 g/cm² to 10,000 g/cm², preferably from 5 g/cm² to 1,000 g/cm², more preferably from 100 g/cm² to 500 g/cm². In one embodiment, the ratio of the thickness of the carbon nanotube layer (that is, the carbon nanotube aggregate) after the compression to the thickness of the carbon nanotube layer before the compression is from 10% to 90%, preferably from 20% to 80%, more preferably from 30% to 60%.

The carbon nanotube aggregate is formed on the base material as described above, and then the carbon nanotube aggregate is collected from the base material. Thus, the carbon nanotube aggregate of the present invention is obtained. In the present invention, the non-aligned portion is formed, and hence the carbon nanotube aggregate can be collected while being in a sheet shape formed on the base material.

### C. Sheet

A sheet of the present invention includes the carbon nanotube aggregate. The sheet of the present invention is preferably formed only of the carbon nanotube aggregate.

The applications of the sheet of the present invention are not particularly limited. The sheet of the present invention may be suitably used as, for example, a pressure-sensitive adhesive transport member in a transport apparatus.

### Examples

The present invention is described below on the basis of Examples, but the present invention is not limited thereto. The thickness of a carbon nanotube aggregate and the thickness of a non-aligned portion of the aggregate were each measured by observing a section of the carbon nanotube aggregate with a SEM. In addition, the standard deviation of the alignment degrees of carbon nanotubes was determined for each division having a thickness of 500 nm by the method described in the section A, and the total thickness of divisions in each of which the standard deviation was 40° or more was defined as the thickness of the non-aligned portion.

In addition, the maximum coefficient of static friction of the carbon nanotube aggregate was measured by the following method.

### <Maximum Coefficient of Static Friction against Glass Surface>

A frictional force was measured by the following method, and a value obtained by dividing the frictional force by a load was defined as a maximum coefficient of static friction.

### (Method of measuring Frictional Force)

An evaluation sample was produced by fixing a surface opposite to the frictional force measurement surface of a carbon nanotube aggregate (size: 9mm×9mm) ontoaslideglassviaapressure-sensitive adhesive tape (polyimide pressure-sensitive adhesive tape).

Next, the evaluation sample was arranged on another slide glass (size: 26 mm×76 mm) while the frictional force measurement surface in the evaluation sample was directed downward. A weight was mounted on the evaluation sample, and its mass was set so that a load of 55 g was applied to the carbon nanotube aggregate.

Next, under an environment at 23°C, the evaluation sample was pulled in a horizontal direction (tensile rate: 100 mm/min) while the weight was mounted thereon. The maximum load when the evaluation sample started to move was defined as its frictional force. A suspension weigher (manufactured by CUSTOM Corporation, product name: "393-25") was used in the measurement of the frictional force. When the suspension weigher indicated a value of 0.05 kg or more, the numerical value was adopted as the frictional force. When the value indicated by the suspension weigher was less than 0.05 kg, the frictional force was evaluated to be 0 kg.

In Example 6, a load of 300 g was applied to compress a carbon nanotube aggregate, and then its frictional force was measured as described above.

### [Example 1] Production of Carbon Nanotube Aggregate

An Al₂O₃ thin film (ultimate vacuum: 8.0×10⁻⁴ Pa, sputtering gas: Ar, gas pressure: 0.50 Pa) was formed in an amount of 3,922 ng/cm² on a silicon base material (manufactured by Valqua FFT Inc. , thickness: 700 µm) with a sputtering apparatus (manufactured by Shibaura Mechatronics Corporation, product name: "CFS-4ES"). An Fe thin film was further formed as a catalyst layer (sputtering gas: Ar, gas pressure: 0.75 Pa) in an amount of 294 ng/cm² on the Al₂O₃ thin film with a sputtering apparatus (manufactured by Shibaura Mechatronics Corporation, product name: "CFS-4ES").

After that, the base material was placed in a quartz tube of 30 mmϕ, and a helium/hydrogen (105/80 sccm) mixed gas having its moisture content kept at 700 ppm was flowed into the quartz tube for 30 minutes to replace the inside of the tube. After that, the temperature in the tube was increased with an electric tubular furnace to 765°C and stabilized at 765°C. While the temperature was kept at 765°C, the inside of the tube was filled with a helium/hydrogen/ethylene (105/80/15 sccm, moisture content: 700 ppm) mixed gas, and the resultant was left to stand for 60 minutes to grow carbon nanotubes on the base material.

After that, the raw material gas was stopped, and the inside of the quartz tube was cooled while a helium/hydrogen (105/80 sccm) mixed gas having its moisture content kept at 700 ppm was flowed into the quartz tube.

A carbon nanotube aggregate having a thickness of 1,100 µm was obtained by the foregoing operation. The portion of the carbon nanotube aggregate upward from the silicon base material by 1 µm was a non-aligned portion having a thickness of 4 µm (standard deviations of alignment degrees: 40° to 67°, average of the standard deviations (the sum of the standard deviations of the respective divisions/the number of the divisions (8)): 48°).

The carbon nanotube aggregate was able to be peeled in a sheet shape from the silicon base material with a pair of tweezers.

In addition, the maximum coefficient of static friction of the carbon nanotube aggregate on its surface on the silicon base material side was 7.1.

### [Example 2] Production of Carbon Nanotube Aggregate

A carbon nanotube aggregate was obtained in the same manner as in Example 1 except that the growth time of the carbon nanotubes was changed from 60 minutes to 32 minutes. The thickness of the resultant carbon nanotube aggregate was 550 µm. In addition, an end portion of the aggregate on the silicon base material side was a non-aligned portion having a thickness of 5 µm (standard deviations of alignment degrees: 41° to 53°, average of the standard deviations (the sum of the standard deviations of the respective divisions/the number of the divisions (10)): 47°).

The carbon nanotube aggregate was able to be peeled in a sheet shape from the silicon base material with a pair of tweezers.

In addition, the maximum coefficient of static friction of the carbon nanotube aggregate on its surface on the silicon base material side was 9.3.

### [Example 3] Production of Carbon Nanotube Aggregate

A carbon nanotube aggregate was obtained in the same manner as in Example 1 except that the growth time of the carbon nanotubes was changed from 60 minutes to 25 minutes. The thickness of the resultant carbon nanotube aggregate was 350 µm. In addition, an end portion of the aggregate on the silicon base material side was a non-aligned portion having a thickness of 2 µm (standard deviations of alignment degrees: 52° to 58°, average of the standard deviations (the sum of the standard deviations of the respective divisions/the number of the divisions (4)): 55°).

The carbon nanotube aggregate was able to be peeled in a sheet shape from the silicon base material with a pair of tweezers.

In addition, the maximum coefficient of static friction of the carbon nanotube aggregate on its surface on the silicon base material side was 3.1.

### [Example 4] Production of Carbon Nanotube Aggregate

A carbon nanotube aggregate was obtained in the same manner as in Example 1 except that a helium/hydrogen/ethylene (105/100/15 sccm, moisture content: 700 ppm) mixed gas was used instead of the helium/hydrogen/ethylene (105/80/15 sccm, moisture content: 700 ppm) mixed gas. The thickness of the resultant carbon nanotube aggregate was 1,000 µm. In addition, an end portion of the aggregate on an opposite side to the silicon base material was a non-aligned portion having a thickness of 0.5 µm (standard deviation of alignment degrees: 45°).

The carbon nanotube aggregate was able to be peeled in a sheet shape from the silicon base material with a pair of tweezers.

In addition, the maximum coefficient of static friction of the carbon nanotube aggregate on its surface on an opposite side to the silicon base material was 1.3.

### [Example 5] Production of Carbon Nanotube Aggregate

A carbon nanotube aggregate was obtained in the same manner as in Example 1 except that the amount of the Fe thin film serving as the catalyst layer was changed from 294 ng/cm² to 725 ng/cm². The thickness of the resultant carbon nanotube aggregate was 1,000 µm. In addition, an end portion of the aggregate on the silicon base material side was a non-aligned portion having a thickness of 12 µm (standard deviations of alignment degrees: 40° to 65°, average of the standard deviations (the sum of the standard deviations of the respective divisions/the number of the divisions (4)) : 48°).

The carbon nanotube aggregate was able to be peeled in a sheet shape from the silicon base material with a pair of tweezers.

In addition, the maximum coefficient of static friction of the carbon nanotube aggregate on its surface on the silicon base material side was 13.

### [Example 6] Production of Carbon Nanotube Aggregate

A carbon nanotube aggregate (thickness: 1,100 µm) was obtained in the same manner as in Example 1. After that, a load of 300 g was gradually applied to the carbon nanotube aggregate (area: 0.81 cm²) to compress the carbon nanotube aggregate. The carbon nanotube aggregate thus obtained had a thickness of 600 µm, and was a non-aligned portion in its entirety (standard deviations of alignment degrees: 40° to 73°, average of the standard deviations (the sum of the standard deviations of the respective divisions/the number of the divisions (1,200)): 56°).

The carbon nanotube aggregate was able to be peeled in a sheet shape from the silicon base material with a pair of tweezers.

In addition, the maximum coefficient of static friction of the carbon nanotube aggregate was 9.5.

### [Comparative Example 1] Production of Carbon Nanotube Aggregate

An Al₂O₃ thin film (ultimate vacuum: 8.0×10⁻⁴ Pa, sputtering gas: Ar, gas pressure: 0.50 Pa) was formed in an amount of 3,922 ng/cm² on a silicon base material (manufactured by Valqua FFT Inc. , thickness: 700 µm) with a sputtering apparatus (manufactured by Shibaura Mechatronics Corporation, product name: "CFS-4ES"). An Fe thin film was further formed as a catalyst layer (sputtering gas: Ar, gas pressure: 0.75 Pa) in an amount of 294 ng/cm² on the Al₂O₃ thin film with a sputtering apparatus (manufactured by Shibaura Mechatronics Corporation, product name: "CFS-4ES").

After that, the base material was placed in a quartz tube of 30 mmϕ, and a helium/hydrogen (85/60 sccm) mixed gas having its moisture content kept at 600 ppm was flowed into the quartz tube for 30 minutes to replace the inside of the tube. After that, the temperature in the tube was increased with an electric tubular furnace to 765°C and stabilized at 765°C. While the temperature was kept at 765°C, the inside of the tube was filled with a helium/hydrogen/acetylene (85/60/5 sccm, moisture content: 600ppm) mixed gas, and the resultant was left to stand for 60 minutes to grow carbon nanotubes on the base material.

After that, the raw material gas was stopped, and the inside of the quartz tube was cooled while a helium/hydrogen (85/60 sccm) mixed gas having its moisture content kept at 600 ppm was flowed into the quartz tube.

A carbon nanotube aggregate having a thickness of 270 µm was obtained by the foregoing operation. The carbon nanotube aggregate was free of any non-aligned portion.

The carbon nanotube aggregate could not be peeled in a sheet shape from the silicon base material with a pair of tweezers.

In addition, the maximum coefficient of static friction of the carbon nanotube aggregate was 0.

### [Comparative Example 2] Production of Carbon Nanotube Aggregate

A carbon nanotube aggregate was obtained in the same manner as in Example 1 except that a helium/ethylene (105/15 sccm, moisture content: 700 ppm) mixed gas was used instead of the helium/hydrogen/ethylene (105/80/15 sccm, moisture content: 700 ppm) mixed gas. The thickness of the resultant carbon nanotube aggregate was 600 µm. The carbon nanotube aggregate was free of any non-aligned portion, and hence could not be peeled in a sheet shape from the silicon base material with a pair of tweezers. In addition, the maximum coefficient of static friction of the carbon nanotube aggregate was 0.

### [Example 5] Production of Carbon Nanotube Aggregate

An Al₂O₃ thin film (ultimate vacuum: 8.0×10⁻⁴ Pa, sputtering gas: Ar, gas pressure: 0.50 Pa) was formed in an amount of 3,922 ng/cm² on a silicon base material (manufactured by Valqua FFT Inc. , thickness: 700 µm) with a sputtering apparatus (manufactured by Shibaura Mechatronics Corporation, product name: "CFS-4ES"). An Fe thin film was further formed as a catalyst layer (sputtering gas: Ar, gas pressure: 0.75 Pa) in an amount of 725 ng/cm² on the Al₂O₃ thin film with a sputtering apparatus (manufactured by Shibaura Mechatronics Corporation, product name: "CFS-4ES").

After that, the base material was placed in a quartz tube of 30 mmϕ, and a helium/hydrogen (105/80 sccm) mixed gas having its moisture content kept at 750 ppm was flowed into the quartz tube for 30 minutes to replace the inside of the tube. After that, the temperature in the tube was increased with an electric tubular furnace to 765°C and stabilized at 765°C. While the temperature was kept at 765°C, the inside of the tube was filled with a helium/hydrogen/ethylene (105/80/15 sccm, moisture content: 750 ppm) mixed gas, and the resultant was left to stand for 60 minutes to grow carbon nanotubes on the base material.

After that, the raw material gas was stopped, and the inside of the quartz tube was cooled while a helium/hydrogen (105/80 sccm) mixed gas having its moisture content kept at 750 ppm was flowed into the quartz tube.

A carbon nanotube aggregate having a thickness of 1,000 µm was obtained by the foregoing operation. The carbon nanotube aggregate included a non-aligned portion in its end portion on the silicon base material side.

### [Example 6]

A carbon nanotube aggregate was obtained in the same manner as in Example 5 except that: the amount of the Fe thin film serving as the catalyst layer was changed from 725 ng/cm² to 540 ng/cm²; and the moisture content of each of the helium/hydrogen (105/80 sccm) mixed gas and the helium/hydrogen/ethylene (105/80/15 sccm) mixed gas was changed from 750 ppm to 500 ppm. The thickness of the resultant carbon nanotube aggregate was 800 µm. The carbon nanotube aggregate included a non-aligned portion in its end portion on the silicon base material side.

### [Example 7]

A carbon nanotube aggregate was obtained in the same manner as in Example 5 except that: the amount of the Fe thin film serving as the catalyst layer was changed from 725 ng/cm² to 540 ng/cm²; a helium/hydrogen (105/60 sccm) mixed gas was used instead of the helium/hydrogen (105/80 sccm) mixed gas; and a helium/hydrogen/ethylene (105/60/15 sccm) mixed gas was used instead of the helium/hydrogen/ethylene (105/80/15 sccm) mixed gas. The thickness of the resultant carbon nanotube aggregate was 1,000 µm. The carbon nanotube aggregate included a non-aligned portion in its end portion on an opposite side to the silicon base material.

### [Example 8]

A carbon nanotube aggregate was obtained in the same manner as in Example 5 except that: the amount of the Fe thin film serving as the catalyst layer was changed from 725 ng/cm² to 540 ng/cm²; a helium/hydrogen (105/100 sccm) mixed gas was used instead of the helium/hydrogen (105/80 sccm) mixed gas; and a helium/hydrogen/ethylene (105/100/15 sccm) mixed gas was used instead of the helium/hydrogen/ethylene (105/80/15 sccm) mixed gas. The thickness of the resultant carbon nanotube aggregate was 1,000 µm. The carbon nanotube aggregate included a non-aligned portion in its end portion on an opposite side to the silicon base material.

### [Example 9]

A carbon nanotube aggregate was obtained in the same manner as in Example 5 except that: the amount of the Fe thin film serving as the catalyst layer was changed from 725 ng/cm² to 540 ng/cm²; and a helium/hydrogen/ethylene (105/100/5 sccm) mixed gas was used instead of the helium/hydrogen/ethylene (105/80/15 sccm) mixed gas. The thickness of the resultant carbon nanotube aggregate was 100 µm. The carbon nanotube aggregate included a non-aligned portion in its end portion on an opposite side to the silicon base material.

### <Evaluation>

The thicknesses of the non-aligned portions of the carbon nanotube aggregates obtained in Examples 5 to 9 and Comparative Example 1, and the maximum coefficients of static friction of the non-aligned portion-formed surfaces of the aggregates were evaluated by the above-mentioned methods. The results are shown in Table 1.

**Table 1**

| | Sputtering condition | CVD condition | | | | Thickness of non-aligned portion (µm) | Maximum coefficient of static friction |
|---|---|---|---|---|---|---|---|
| | Fe amount (ng/cm²) | Moisture amount (ppm) | H₂ flow rate (sccm) | C₂H₄ flow rate (sccm) | C₂H₂ flow rate (sccm) | | |
| Example 5 | 725 | 750 | 80 | 15 | - | 12 | 12.9 |
| Example 6 | 540 | 500 | 80 | 15 | - | 4 | 7.8 |
| Example 7 | 540 | 750 | 60 | 15 | - | 2.5 | 3.1 |
| Example 8 | 540 | 750 | 100 | 15 | - | 0.5 | 1.3 |
| Example 9 | 540 | 750 | 80 | 15 | - | 1.5 | 1.5 |
| Comparative Example 1 | 294 | 600 | 60 | - | 5 | 0 | 0 |

As is apparent from Table 1, a carbon nanotube aggregate including a non-aligned portion in an end portion in the lengthwise direction thereof has a high maximum coefficient of static friction. Such carbon nanotube aggregate can express a high gripping force. Each of the carbon nanotube aggregates of Examples 5 to 9 was able to be peeled in a sheet shape from the silicon base material with a pair of tweezers.

### Reference Signs List

- **10**: carbon nanotube
- **110**: non-aligned portion
- **120**: aligned portion
- **100, 100'**: carbon nanotube aggregate

## Claims

1. A carbon nanotube aggregate, comprising a plurality of carbon nanotubes, the carbon nanotube aggregate being formed into a sheet shape, wherein the carbon nanotube aggregate comprises a non-aligned portion of the carbon nanotubes.

2. The carbon nanotube aggregate according to claim 1, further comprising an aligned portion of the carbon nanotubes.

3. The carbon nanotube aggregate according to claim 1 or 2, wherein the non-aligned portion is present near an end portion in a lengthwise direction of the carbon nanotube aggregate.

4. The carbon nanotube aggregate according to claim 3, wherein the non-aligned portion positioned near the end portion in the lengthwise direction has a length of 0.5 µm or more.

5. The carbon nanotube aggregate according to claim 3 or 4, wherein a surface of the carbon nanotube aggregate having formed thereon the non-aligned portion has a maximum coefficient of static friction at 23°C of 1.0 or more.

6. The carbon nanotube aggregate according to claim 1, wherein the carbon nanotube aggregate is free of an aligned portion of the carbon nanotubes.

7. The carbon nanotube aggregate according to any one of claims 1 to 6, wherein the carbon nanotube aggregate has a thickness of from 10 µm to 5,000 µm.

8. A sheet, comprising the carbon nanotube aggregate of any one of claims 1 to 7.
